# EUROPEAN PATENT SPECIFICATION

(11) **EP 3 235 625 B1**
(45) Date of publication and mention of the grant of the patent: **29.07.2020**
(21) Application number: 17167032.6
(22) Date of filing: 19.04.2017
(51) Int. Cl.: B29C 57/04

(54) **APPARATUS AND METHOD FOR MAKING BELL JOINTS ON PLASTIC PIPES**
VORRICHTUNG UND VERFAHREN ZUR HERSTELLUNG VON MUFFENVERBINDUNGEN AN KUNSTSTOFFROHREN
DISPOSITIF ET PROCÉDÉ POUR LA FABRICATION DE RACCORDEMENT EN FORME DE TULIPE POUR TUYAUX PLASTIQUES

(30) Priority: 20.04.2016 IT UA20162763
(43) Date of publication of application: 25.10.2017
(73) Proprietor: IPM S.R.L., 48022 Lugo (Ravenna) (IT)
(72) Inventor: ARGNANI, Claudio, 48010 Fusignano (RA) (IT)
(74) Representative: Cicconetti, Andrea

(56) References cited:
- EP-A1- 0 930 148
- EP-A1- 1 043 143
- US-A- 4 379 115

## Description

The invention relates to apparatuses and methods for making bell joints on ends of plastics pipes, and in particular it relates to an apparatus for making bell joints, in particular provided with annular seats for housing sealing gaskets, by means of hot plastic deformation on ends of plastics pipes.

In the field of plastics pipes, it is widespread the type of joint that provides the junction between two subsequent pipes by the so called "bell" sleeves or joints. By bell joint it is intended the so called "female" portion of the pipe end which has an enlargement of the cross section (external and internal diameters) such as to make a sort of enlarged tubular sleeve adapted to receive and couple with the so called "male" end, that is normal and not enlarged, of the following pipe. An annular groove or gap is usually made inside the joint intended to form a seat capable of housing a gasket ensuring the hydraulic sealing between the two pipes of the pipeline, once the junction is made.

Bell joints are usually made directly on the pipe end by means of hot plastic deformation of the aforesaid end (belling process) through suitable forming apparatuses.

There are forming apparatuses which provide the use of a mandrel or metallic shaft axially forced inside the pipe, previously heated, so as to make the bell joint by means of plastic deformation. The mandrel is provided with a plurality of inserts or sectors radially expandable outwardly to make the annular groove for the sealing gasket. After forming the groove, the sectors are radially moved inwardly so as to allow the mandrel to freely disengage from the joint in an axial direction.

Some forming apparatuses include external moulds which enclose the pipe end so as to exert a suitable external pressure on the bell joint in order to make an outer surface in cooperation with the inner mandrel.

In such a kind of apparatuses, as a replacement for the inner forming mandrel, a blowing system may be provided capable of introducing air inside the pipe at such a pressure as to deform plastics and to push the pipe side wall against the external moulds so as to make the bell joint.

As a substitute for external moulds, other forming apparatuses comprise a compression chamber or bell which encloses externally and sealingly the pipe end through which compressed air is introduced. Pressurized air applies a compression on the external wall of the bell joint contributing, along with the inner mandrel, to make the joint thereof.

All the aforesaid known forming apparatuses provide the cooling of the bell joint during and after its forming in order to avoid the shrinking and contraction of the plastic material and its plastic return to the original size it had before the heating and forming processes. Cooling in fact allows to solidify and stabilize the material after the plastic deformation.

For this purpose, in apparatuses provided with a mandrel and external moulds, the latter are cooled by a liquid, typically air or pressurized water, which flows inside specific circuits or flowing ducts so as to cool the outer surfaces of the mandrel and of the moulds in contact with the external wall of the joint by means of conduction.

In the forming apparatuses provided with an external compression chamber the pressurized air used to make the joint wall is also used for the cooling.

A drawback of such cooling system is that the air must be duly cooled before being introduced into the chamber and, owing to the low heat exchange coefficient, a significant quantity of air must be introduced in order to cool the pipe effectively and without taking too much time.

Furthermore, as the air flow usually hits the pipe end in an almost radial way with respect to the longitudinal axis thereof, the wall portion opposite to the wall first hit by the flow is licked by the already partially heated air and, in any case, in an non-uniform way. This determines an irregular and uneven cooling of the bell joint both along a longitudinal axis thereof and around each of the annular portions which compose a joint side wall, provoking internal tensions and/or contractions and/or localized shrinking of the plastic material.

In some forming apparatuses the cooling of the pipe end is made through water which is sprayed inside the compression chamber so as to hit the joint external wall.

The cooling systems with water enable to cool the pipe end more effectively and rapidly than air, though they turn out to be rather complex and expensive since they require a suitable hydraulic plant for the cooling and flowing of the pressurized water. Furthermore, not always the water sprayed inside the compression chamber is distributed so as to cool uniformly the whole bell joint.

What's more, the forming apparatus and the machine whereon it is installed must be suitable to treat wet pipes after the forming, that is they must be able to function even in presence of water. In some cases, suitable means must be provided in order to dry the pipes ends after the forming.

EP1043143 discloses an apparatus for making bell joints on the terminal junction section of thermoplastic pipes preventively heated to the plastic state, comprising a first mandrel with fixed geometry and smooth external surface, able to be progressively introduced into the terminal section to produce a forced dilation and pre-form a first temporary bell mouth after heating the terminal section in differentiated form, a mandrel for the calibration of the definitive bell mouth, able to be introduced preventively into the temporary bell mouth, and cooling means for cooling the definitive bell mouth.

EP0930148 provides for conferring a cup shape to the terminal junction segment of pipes, in particular pipes that are bi-axially oriented longitudinally and circumferentially, by means of passage into a furnace, which heats the segment to a temperature increasing towards the end of the segment. The segment inner diameter progressively drops down to a controlled value as temperature increases, whilst length is simultaneously reduced and thickness increased. An additional heating is executed to a plastic deformation temperature suited to obtain a correct preliminary dilation of the terminal segment, introducing a rigid element. Such terminal segment, dilated and heated, is then fitted onto a heated calibration expander. Here the terminal end takes its shape and is cooled.

An object of the present invention is to improve the known apparatuses for forming bell joints, in particular bell joints provided with annular seats for sealing gaskets, on plastics pipes.

Another object is providing a forming apparatus allowing to cool optimally the bell joints during and after their formation in order to prevent contractions and/or shrinking and solidify the plastic material deformation.

A further object is implementing a forming apparatus and method allowing to cool, in a uniform way, the bell joint in all its portions and/or in the whole wall thickness.

Another further object is implementing a forming apparatus having simple and cheap structure as well as efficient and reliable functioning.

In a first aspect of the invention a forming apparatus according to claim 1 is provided.

The invention shall be better understood and implemented referring to the enclosed drawings illustrating an exemplary and non-limiting embodiment, wherein:
- Figure 1 is a cross section of the forming apparatus of the invention associated to a plastics pipe in order to make a bell joint on one end of the plastics pipe and in an initial configuration;
- Figure 2 is a cross section of the apparatus of Figure 1 in one operative configuration of pipe locking;
- Figure 3 is an enlarged cross section of the apparatus of Figure 1 in one operative configuration of introduction of a forming mandrel in a pipe end.
- Figure 4 is an enlarged section of the apparatus of Figure 1 in one operative forming and cooling configuration of the bell joint;
- Figure 5 is a section of the apparatus of Figure 1 in one operative end-of-forming configuration;
- Figure 6 in an enlarged section of the apparatus of Figure 1 in one operative configuration of disengagement of the forming mandrel;
- Figure 7 is a cross section along line VII-VII of Figure 4.

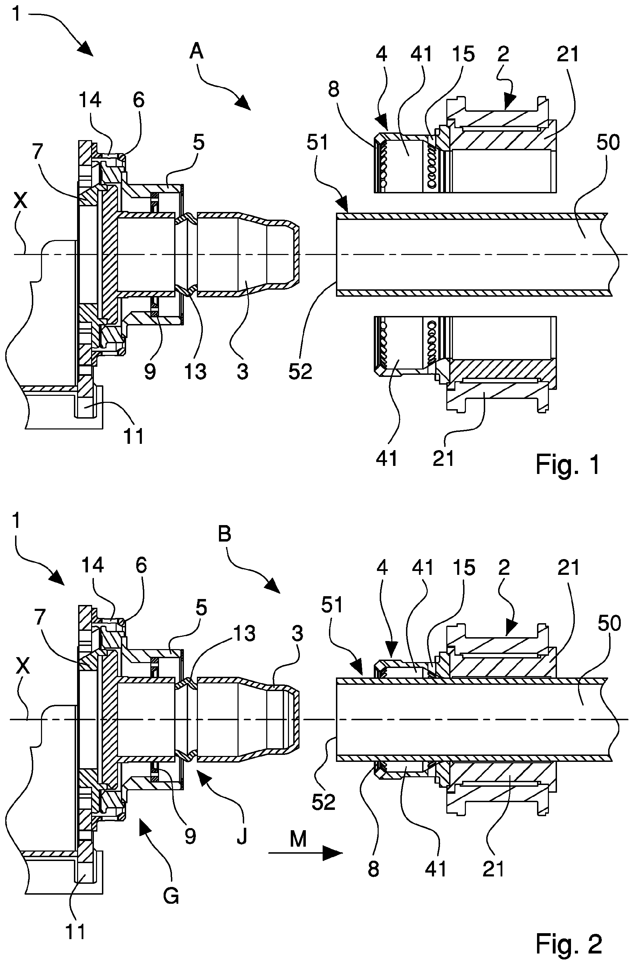

Referring to Figures 1 to 7, a forming apparatus 1 is illustrated that is arranged to make a bell joint 60 on an end 51 of a plastics pipe 50, for example made of PVC, by means of hot plastic deformation.

The forming apparatus comprises locking means 2 for gripping and locking the pipe 50 at said end 51 on opposite side with respect to a mouth 52 thereof and inner forming means 3, intended to operate inside the end 51 to form the bell joint 60. Inner forming means 3 and locking means 2 are movable between them along a movement direction M, parallel to a longitudinal axis X of the end 51 of the pipe 50, to enable the introduction or removal of the inner forming means 3 into/from said end 51.

Locking means 2 comprise a couple of clamps 21 mutually opposite and movable transversely, in particular almost orthogonally, to the longitudinal axis X in mutual approach or displacement for locking or releasing the pipe 50 respectively.

Inner forming means comprise for instance a mandrel 3 of the known type, provided with a plurality of forming sectors 13 transversely and externally expandable into an extended position K to form an annular seat 62 for a sealing gasket on a side wall 61 of the bell joint 60. Sectors 13 are internally retractable into a retracted position J to enable to extract the mandrel 3 out of the pipe 50 at the end of the forming of the bell joint 60.

The mandrel 3 is fixed to supporting means 7, connected to movement means 11 of the known type and not illustrated in detail in the figures, so that they can be moved along the movement direction M. The mandrel 3 is thus movable and may be inserted into, or removed from, the end 51.

In an apparatus variant not illustrated in the figures, the inner forming means may comprise a shaft, sealingly insertable inside the end 51, and blowing means to introduce in the latter pressurized air adapted to make the bell joint 60. The shaft closes the pipe 50 internally and forms a chamber inside the end 51 wherein high pressure air may be introduced able to deform outwardly the side wall 61 and thus make the bell joint 60.

The forming apparatus 1 also comprises containing means 4, 5, 6 for enclosing in a forming and cooling configuration D of the apparatus 1, the bell joint 60 during the forming thereof.

The containing means 4, 5, 6 are also arranged to convey an air flow T around and along a side wall 61 of the bell joint 60. Said air flow T licks an outer surface 61a of the side wall 61 along a cooling direction R substantially parallel to the longitudinal axis X of the end 51 so as to cool the bell joint 60 solidifying the plastic deformation of the material and avoiding its contraction and/or the shrinking back to the previous size before the forming. The containing means 4, 5, 6 in the forming and cooling configuration D and during the bell joint 60 forming, form with the side wall 61 of the joint 60 a cooling duct 10 having substantially annular shape through which the air flow T, which is uniformly distributed around the longitudinal axis X, is conveyed. The cooling duct 10 thus extends along the cooling direction R and has passage sections such as to achieve an air flow T that is substantially uniform along and around the side wall 61.

Thereby, the air flow T integrally licks the outer surface 61a of the side wall 61 along the cooling direction R.

The containing means 4, 5, 6 comprise one or more inlet openings 14 for the inflow of the pressurized air in the cooling duct 10 and one or more outlet openings 15 for the outflow of air from the cooling duct 10 into the surrounding environment.

In the embodiment illustrated in the Figures, the containing means 4, 5, 6 comprise a plurality of inlet openings 14 transverse to the side wall 61 of the joint 60 and arranged angularly spaced apart from each other around a longitudinal axis of said containing means 4, 5, 6. In particular, in the forming and cooling configuration D of the apparatus 1, the inlet openings 14 are substantially radial with respect to the pipe 50, namely the longitudinal axis X.

Similarly, the containing means 4, 5, 6 comprise a plurality of outlet openings 15 transverse to the cooling direction R and arranged angularly spaced apart from each other around a longitudinal axis of said containing means 4, 5, 6. In particular, in the forming and cooling configuration D of the apparatus 1, the outlet openings 15 are substantially radial with respect to the pipe 50, namely the longitudinal axis X.

In a preferred embodiment, the inlet openings 14 are openings made at an initial segment 10a of the cooling duct 10 overlooking and corresponding to the mouth 52 of the pipe 50 and the bell joint 60, while the outlet openings 15 are openings made at a terminal segment 10b of the cooling duct 10 surrounding a terminal portion 60b of the joint 60 joining with the not formed part of the pipe 50. Thereby, the air flow T flows inside the cooling duct 10 along the cooling direction R towards the mouth 52 of the pipe 50, initially hitting in a uniform way an initial portion 60a of the joint 60 comprising the annular seat 62 and subsequently a central portion 60c and the terminal portion 60b of the bell joint 60 thereof. Alternatively, the inlet openings may be made at the terminal segment 10b of the cooling duct 10 and the outlet openings 15 at the initial segment 10a of the cooling duct 10, so as to generate an air flow T which flows within the cooling duct 10 along the cooling direction R still hitting in a uniform way at first the terminal portion 60b of the bell joint 60 (joining with the not formed part of the pipe 50) and then the initial portion 60a of the bell joint which comprises the annular seat 62.

In the embodiment shown in the Figures, the containing means 4, 5, 6 comprise a first tubular element 4 connected to the locking means 2 and a second tubular element 5 and a third tubular element 6 both associated to the inner forming means 3, namely the mandrel 3.

The first tubular element 4 includes, in particular, a couple of opposite half-shells 41, substantially half-cylindrical shaped, each of which is fixed to, and movable with, a respective clamp 21 of the locking means 2. Each half-shell 41 is provided with a respective plurality of outlet openings 15 made at one of its end portions connected to the relative clamp 21.

When the clamps 21 are in abutment with the pipe 50 to block the latter, the two half-shells 41 are in abutment and form the tubular element 4 almost cylindrical, external and coaxial to the pipe 50.

The second tubular element 5 is slidingly connected to supporting means 7 of the mandrel 3 and movable with respect to the latter along the cooling direction R between a backward position G and an advanced position H.

In the forming and cooling configuration D the second tubular element 5 is arranged for containing and enclosing at least the initial portion 60a of the bell joint 60 and forming the cooling duct 10 with the side wall 61 of the bell joint and in cooperation with the first tubular element.

The third tubular element 6 is fixed to the supporting means 7 of the mandrel 3 and cooperates with the first tubular element 4 and the second tubular element 5 to form the cooling duct 10 with a side wall 61 of the bell joint 60. More precisely, in the illustrated embodiment, the first tubular element 4 forms the terminal segment 10b of the cooling duct 10 with the side wall 61 of the bell joint 60 and forms a central segment 10c of the cooling duct 10 in cooperation with the second tubular element 5. The second tubular element 5 in cooperation with the third tubular element 6 forms the initial segment 10a of the cooling duct 10 with the side wall 61 of the bell joint 60 and with an external wall 3a of the mandrel. The third tubular element 6 is provided with a respective plurality of inlet openings 14, substantially adjacent to the supporting means 7.

External forming means 8,9 are provided to cooperate with the inner forming means 3, namely the mandrel, to form the bell joint 60 and in particular to form, on the side wall 61 of the latter, an annular seat 62 arranged to receive a sealing gasket.

External forming means 8, 9 comprise, for example, a first forming ring 8 and a second forming ring 9 acting on the outer surface 61a of the side wall 61,cooperating with the inner forming means 3, more precisely with the forming sectors 13 of the mandrel 3 to form the annular seat 62.

The first forming ring 8 is fixed to a free end of the first tubular element 4 opposite to the locking means 2 and comprises first through openings 18 for the passage of the air flow T. In the illustrated embodiment, the first forming ring 8 is made in a single piece with the first tubular element 4 representing basically its free end. The first forming ring 8 thus comprises a couple of half-rings each of which is fixed, more precisely integrated, to the respective half-shell 41 of the tubular element 4.

On the contrary, the second forming ring 9 is fixed within the second tubular element 5 and comprises second through openings 19 for the passage of the air flow T.

The first through openings 18 and the second through openings 19 of the forming rings 8, 9 have respective passage sections calibrated to make the air flow T substantially uniform along the outer surface 61a of the side wall 61 in the cooling duct 10 formed by tubular elements 4, 5, 6.

The first forming ring 8 and the second forming ring 9 have respective rubber inserts at the portions that abut the side wall 61 of the bell joint 60 so as not to damage or ruin the outer surface 61a.

The functioning of the forming apparatus 1 of the invention to make a bell joint 60 on the end 51 of a plastics pipe 50 provides a first operative phase wherein the previously heated end 51 of the pipe 50 is positioned at the locking means 2, wherein the clamps 21 are arranged in open position, in an initial configuration A of the forming apparatus 1 (Figure 1).

In a second operative phase, the apparatus 1 is arranged in an operative configuration of pipe locking B wherein the clamps 21 of the locking means 2 are closed so as to block the pipe 50 at the end 51. The half-shells 41 of the first tubular element 4, fixed to the clamps 21, are in abutment so as to enclose the end 51 (Figure 2).

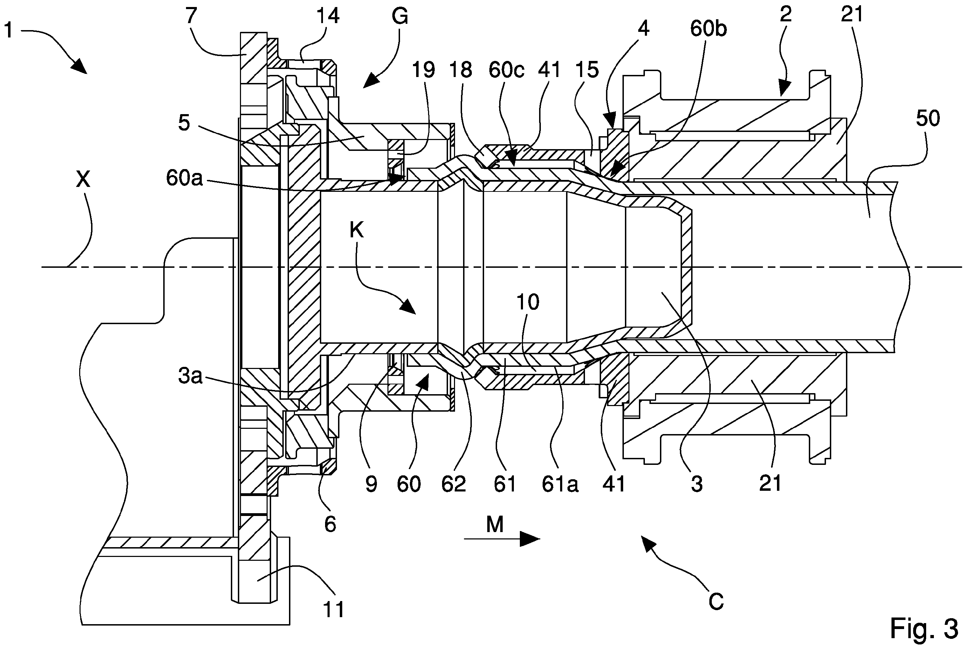

In a third operative phase, the forming mandrel 3, along with the sectors 13 in the retracted position J, is moved along the movement direction M and forced inside the end 51 (in an operative configuration of introducing the mandrel C into the apparatus 1) so as to enlarge the latter and partially make the bell joint 60. The mandrel sectors 13 are thus enlarged outwardly, radially up to the extended position K so as to make at least partially, on the side wall 61 of the bell joint 60, the annular seat 62 in cooperation with the first forming ring 8. More precisely, the expanding sectors 13 push and deform the relative portion of side wall 61 pushing it against the first forming ring 8 (Figure3).

In this third operative phase, the second tubular element 5 is moved along with the mandrel 3 towards the movement direction M. The second tubular element 5 is in the retracted position G with respect to the supporting means 7 of the mandrel 3 so that the second forming ring 9 is spaced from the side wall 61 of the joint 60.

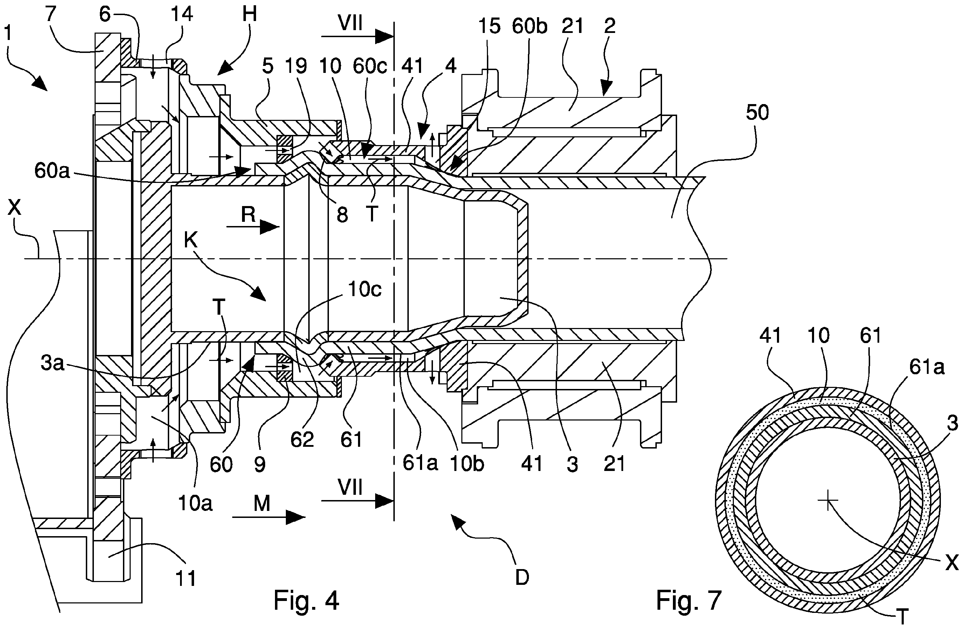

In a fourth operative phase, the apparatus 1 is arranged in an operative forming and cooling configuration of the pipe D wherein the second tubular element 5 is moved along the movement direction M with respect to the mandrel 3 in the advanced position H so that the second forming ring 9 abuts the side wall 61 of the joint 60 and cooperates with the first forming ring 8 and the sectors 13 of the mandrel 3 in forming the annular seat 62 (Figure 4). In this same phase the inflow of pressurized air in the containing means 4, 5, 6 is provided through the inlet openings 14 in order to cool the formed bell joint 60 and solidify the plastics deformation of the material, thereby avoiding future shrinking and contractions of the latter.

The air is introduced with a pressure comprised for example between 100 and 400 KPa, and at a temperature comprised for example between 30 and 10 °C. Pressure and temperature of the cooling air depend on the environment conditions (e.g. temperature, humidity, pressure) of the place wherein the apparatus 1 is placed and the forming of the pipes 50 takes place.

Air is introduced through the plurality of inlet openings 14 substantially radial to the longitudinal axis of the end 51 with uniform distribution, in particular circumferential, around the latter and at the initial segment 10a of the cooling duct 10, formed by the three tubular elements of the containing means 4, 5, 6. Inside the cooling duct 10 an air flow T is originated which licks the whole outer surface 61a of the side wall 61 along the cooling direction R and parallel to the longitudinal axis, from the initial segment 10a to the terminal segment 10b of the cooling duct 10, that is from the initial portion 60a of the joint 60 including the mouth 52 and the annular seat 62, to the terminal portion 60b of the joint 60, joining with the not formed part of the pipe 50.

As already mentioned, thanks to the shape and the sections of the cooling duct 10, the air flow T has a uniform distribution around the longitudinal axis X, that is it is substantially uniform along and around the side wall 61. In particular the through openings 18, 19 of the forming rings 8, 9 have such size and orientation as to guarantee a constant air flow licking the side wall 61 at the annular seat 62.

Similarly, the outlet openings 15 made on the first tubular element 4 have such sizes and (radial) positioning as to enable a constant and uniform outflow of the air flow T from the cooling duct 10.

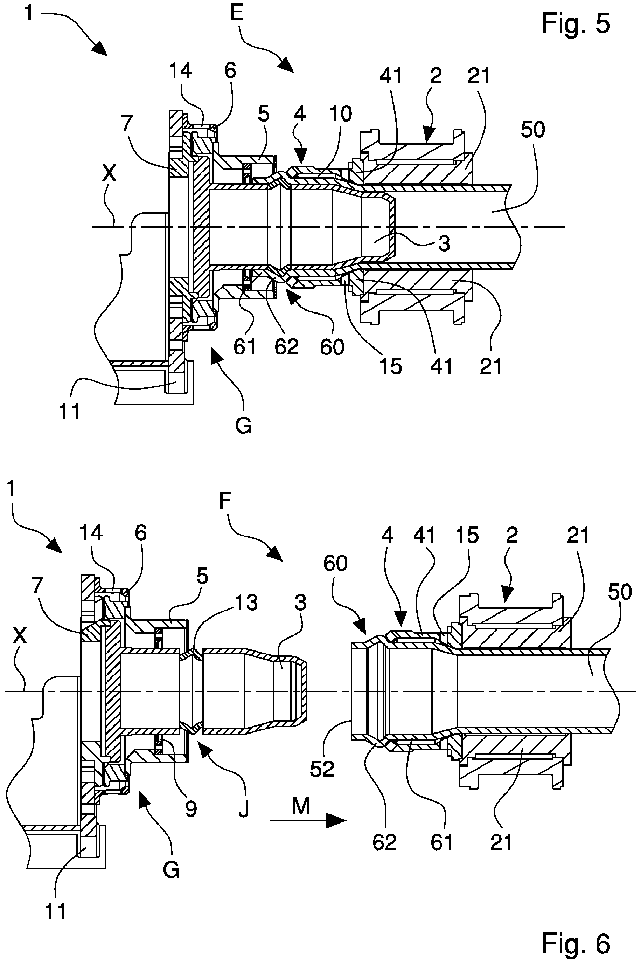

It must be noted that, due to the previous heating, the temperature of the end 51 of the pipe 50 (and consequently of the bell joint 60 that is formed), reduces gradually from the mouth 52 (that is from the initial portion 60a to the terminal portion 60b of the joint 60) and that the air flow T flows towards the mouth 52, so as to hit at first (in the initial segment 10a of the cooling duct 10) the initial portion 60a (hotter) of the joint 60 comprising the mouth 52 and the annular seat 62. Thereby, the annular seat 62, which is the portion plastically more deformed of the side wall 61, is hit by lower temperature air, thus allowing a more efficient end-of-forming E of the apparatus 1 (Figure 5). At the same time, or after a predetermined time lapse, the introduction of pressurized air inside the containing means 4, 5, 6 is stopped and thus the cooling of the bell joint 60 is interrupted.

In a sixth operative phase, the sectors 13 of the mandrel 3 are returned into the retracted position J in such a way as to allow the disengagement of the mandrel 3 from the bell joint 60 in an operative configuration of disengagement of the mandrel 3 of the apparatus 1. The mandrel 3 and the second tubular element 5 and third tubular element 6 connected to it are moved along the movement direction M away from the locking means 2, whose clamps 21 are still closed so as to lock the pipe 50 (Figure 6).

In a seventh operative phase, the clamps 21 of the locking means 2 are opened to allow the removal of the forming apparatus 1 of the pipe 50 provided with bell joint 60.

Thanks to the forming apparatus of the invention it is possible to cool in an optimal way a bell joint 60 during and after its formation on the end 51 of the pipe 50, so as to prevent the contraction and/or the shrinking of the bell joint 60 thereof and solidify the plastic deformation of the material.

More precisely, thanks to the containing means 4, 5, 6 which form, with the side wall 61 of the bell joint 60, a cooling duct 10 having annular shape with predetermined passage sections, it is possible to cool the joint 60 uniformly in all its portions and /or in the whole wall thickness. In particular, the air flow T has annular shape, it is uniformly distributed around the longitudinal axis X, it licks axially along the cooling direction R the inlet opening 51 towards the mouth 52 of the pipe 50 and it then allows to obtain an optimal heat exchange More precisely, thanks to the containing means 4, 5, 6 which form, with the side wall 61 of the bell joint 60, a cooling duct 10 having annular shape with predetermined passage sections, it is possible to cool the joint 60 uniformly in all its portions and /or in the whole wall thickness. In particular, the air flow T has annular shape, it is uniformly distributed around the longitudinal axis X, it licks axially along the cooling direction R the inlet opening 51 towards the mouth 52 of the pipe 50 and it then allows to obtain an optimal heat exchange with the hot side wall 61, so as to guarantee a more effective and rapid cooling of the joint 60 along its whole length.

The air flow T gradually heats in the cooling duct 10 along the cooling direction R, licking the side wall 61, its temperature changing along the longitudinal axis X. However, the air flow temperature T is substantially constant and uniform in each annular section of the cooling duct 10 along the longitudinal axis X, so that each annular portion of the side wall 61 along the longitudinal axis X is licked by air which is substantially at the same temperature. Thereby, a uniform cooling of the side wall 61 of the bell joint 60 takes place both along the longitudinal axis X and in circumferential direction, that is around each of the annular portions which compose the side wall 61: thereby it is avoided the formation of internal tensions and/or contractions and/or localized shrinking of plastic material which may lead to the deformation of the joint 60 both longitudinally along the axis X (bending) and transversally (deformation of the transverse sections or annular portions). Furthermore, by conveying the air into the cooling duct 10, it is possible to reduce and contain air consumptions, that is the volume of air to be used to cool each bell joint 60.

In one variant of the forming apparatus lof the invention, that is not illustrated in Figures, the forming of the bell joint 60 may be made by the only inner forming means 3 and in this case, if no external forming element is present, containing means may comprise only one tubular element, connected to the locking means 2 or the supporting means 7 of the mandrel 3.

## Claims

1. Forming apparatus (1) for making a bell joint (60) on an end (51) of a plastics pipe (50) by means of hot plastic deformation, comprising:
- locking means (2) for gripping and locking said pipe (50) at said end (51) on opposite side with respect to a mouth (52) thereof;
- inner forming means (3) operating inside said end (51) to form said bell joint (60); the apparatus further comprises containing means (4, 5, 6) for enclosing in a forming and cooling configuration (D) of said apparatus (1), said bell joint (60) during the forming thereof and forming with a side wall (61) of the latter a cooling duct (10) having substantially annular shape through which an air flow (T) can be conveyed around and along said side wall (61), said air flow (T) having a uniform distribution inside the cooling duct (10) around a longitudinal axis (X) of said end (51) and is, in use, integrally licking an outer surface (61a) of the side wall (61) along a cooling direction (R) substantially parallel to said longitudinal axis (X) so as to uniformly cool the bell joint (60), wherein said cooling duct (10) extends along said cooling direction (R) and has passage sections such as to achieve that said air flow (T) is substantially uniform along, and around, said side wall (61).

2. Apparatus according to claim 1, wherein said containing means (4, 5, 6) comprise at least one inlet opening (14) for the inflow of said air in said cooling duct (10) and at least one outlet opening (15) for the outflow of said air from said cooling duct (10), in particular said inlet opening (14) and said outlet opening (15) being positioned on said containing means (4, 5, 6) so that said air flow (T) entering said cooling duct (10) flows towards said mouth (52) in order to hit at first an initial portion (60a) of said bell joint (60) that comprises said mouth (52).

3. Apparatus according to claim 2, wherein said containing means (4, 5, 6) comprise a plurality of inlet openings (14) and a plurality of outlet openings (15), that are substantially transverse to said side wall (61).

4. Apparatus according to any preceding claim, wherein said locking means (2) comprise a couple of clamps (21) mutually opposite and movable transversely to said longitudinal axis (X) for locking or releasing said pipe (50).

5. Apparatus according to any preceding claim, wherein said containing means (4, 5, 6) comprise at least a first tubular element (4), in particular connected to said locking means (2).

6. Apparatus according to claims 4 and 5, wherein said first tubular element (4) comprises a couple of opposite half-shells (41), each half-shell (41, 42) being fixed to, and movable with, a respective clamp (21) of said locking means (2).

7. Apparatus according to claim 5 or 6, wherein said containing means (4, 5, 6) comprise a second tubular element (5) associated to said inner forming means (3) and arranged for containing and enclosing at least an initial portion (60a) of said bell joint (60) and forming said cooling duct (10) with said side wall (61) thereof and in cooperation with said first tubular element (4).

8. Apparatus according to claim 7, wherein said containing means (4, 5, 6) comprise a third tubular element (6) associated to said inner forming means (3), in particular fixed to support means (7) of said inner forming means (3), and cooperating with said first tubular element (4) and said second tubular element (5) to form said cooling duct (10) at least with a side wall (61) of said bell joint (60).

9. Apparatus according to any preceding claim, comprising external forming means (8, 9) cooperating with said inner forming means (3) for forming said bell joint (60), in particular for forming on said side wall (61) of said bell joint (60) an annular seat (62) for a sealing gasket.

10. Apparatus according to claim 9, wherein said external forming means (8, 9) comprises a first forming ring (8) and a second forming ring (9) acting on an outer surface (61a) of said side wall (61) and cooperating with said inner forming means (3) to form said annular seat (62).

11. Apparatus according to claim 10, as claim 9 is depending on any of claims 5 to 8, wherein said first forming ring (8) is fixed to an end of said first tubular element (4) and comprises first through openings (18) for the passage of said air flow (T), in particular said first through openings (18) having respective passage sections that are calibrated so as to achieve said air flow (T) substantially uniform along said outer surface (61a) of said side wall (61).

12. Apparatus according to claims 7 and 10, wherein said second forming ring (9) is fixed inside said tubular element (5) and comprises second through openings (19) for the passage of said air flow (T), in particular said second through opening (19) having respective passage sections that are calibrated so as to achieve said air flow (T) substantially uniform along said outer surface (61a) of said side wall (61).

## Patentansprüche

1. Formvorrichtung (1) zum Herstellen eines Glockengelenks (60) an einem Ende (51) eines Plastikrohrs (50) mittels heißer plastischer Verformung, umfassend:
- Verriegelungsmittel (2) zum Greifen und Verriegeln des Rohrs (50) an dem Ende (51) an gegenüberliegender Seite in Bezug auf einen Mund (52) davon;
- innere Formmittel (3) die innerhalb des Endes (51) operieren, um das Glockengelenk (60) zu formen;
wobei die Vorrichtung weiter Aufnahmemittel (4, 5, 6) zum Einschließen des Glockengelenks (60) in einer Form- und Kühlkonfiguration (D) der Vorrichtung (1) während der Formung desselben umfasst und mit einer Seitenwand (61) der letzteren eine Kühlleitung (10) formt, die eine im Wesentlichen ringförmige Form aufweist, durch die ein Luftfluss (T) um die Seitenwand (61) herum und daran entlang geführt werden kann, wobei der Luftfluss (T) eine gleichförmige Verteilung innerhalb der Kühlleitung (10) um eine Längsachse (X) des Endes (51) aufweist und bei Verwendung eine äußere Oberfläche (61a) der Seitenwand (61) entlang einer Kühlrichtung (R), die im Wesentlichen parallel zu der Längsachse (X) verläuft, integral leckt um das Glockengelenk (60) gleichförmig zu kühlen, wobei sich die Kühlleitung (10) entlang der Kühlrichtung (R) erstreckt und Durchlassabschnitte aufweist, um zu erreichen, dass der Luftfluss (T) im Wesentlichen gleichförmig entlang der Seitenwand (61) und darum herum ist.

2. Vorrichtung gemäß Anspruch 1, wobei die Aufnahmemittel (4, 5, 6) zumindest eine Einlassöffnung (14) für den Einfluss der Luft in die Kühlleitung (10) und zumindest eine Auslassöffnung (15) für den Ausfluss der Luft aus der Kühlleitung (10) umfassen, wobei insbesondere die Einlassöffnung (14) und die Auslassöffnung (15) an den Aufnahmemitteln (4, 5, 6) positioniert sind, sodass der Luftfluss (T), der in die Kühlleitung (10) eintritt, zu dem Mund (52) hinfließt, um zuerst auf einen Anfangsbereich (60a) des Glockengelenks (60) zu treffen, der den Mund (52) umfasst.

3. Vorrichtung gemäß Anspruch 2, wobei die Aufnahmemittel (4, 5, 6) eine Mehrzahl von Einlassöffnungen (14) und eine Mehrzahl von Auslassöffnungen (15) umfassen, die im Wesentlichen transversal zu der Seitenwand (61) sind.

4. Vorrichtung gemäß jedem vorhergehenden Anspruch, wobei die Verriegelungsmittel (2) ein paar Klammern (21) umfassen, die zueinander gegenüber und transversal zu der Längsachse (X) bewegbar sind, um das Rohr (50) zu verriegeln oder loszulassen.

5. Vorrichtung gemäß jedem vorhergehenden Anspruch, wobei die Aufnahmemittel (4, 5, 6) zumindest ein erstes Röhrenelement (4) umfassen, das insbesondere mit den Verriegelungsmitteln (2) verbunden ist.

6. Vorrichtung gemäß einem der Ansprüche 4 und 5, wobei das erste Röhrenelement (4) ein paar von gegenüberliegenden Halbschalen (41) umfasst, wobei jede Halbschale (41, 42) an einer jeweiligen Klammer (21) der Verriegelungsmittel (2) fixiert und damit beweglich ist.

7. Vorrichtung gemäß Anspruch 5 oder 6, wobei die Aufnahmemittel (4, 5, 6) ein zweites Röhrenelement (5) umfassen, das den inneren Formmitteln (3) zugeordnet ist und angeordnet ist zum Aufnehmen und Einschließen zumindest eines Anfangsbereich (60a) des Glockengelenks (60) und die Kühlleitung (10) mit der Seitenwand (61) davon und in Zusammenarbeit mit dem ersten Röhrenelement (4) formt.

8. Vorrichtung gemäß Anspruch 7, wobei die Aufnahmemittel (4, 5, 6) ein drittes Röhrenelement (6) umfassen, das den inneren Formmitteln (3) zugeordnet ist, das insbesondere an Stützmitteln (7) der inneren Formmittel (3) fixiert ist und mit dem ersten Röhrenelement (4) und dem zweiten Röhrenelement (5) zusammenarbeitet, um die Kühlleitung (10) mit zumindest einer Seitenwand (61) des Glockengelenks (60) zu formen.

9. Vorrichtung gemäß jedem vorhergehenden Anspruch, umfassend äußere Formmittel (8, 9), die mit den inneren Formmitteln (3) zusammenarbeiten, um das Glockengelenk (60) zu formen, insbesondere um an der Seitenwand (61) des Glockengelenks (60) einen ringförmigen Sitz (62) für eine Dichtung zu formen.

10. Vorrichtung gemäß Anspruch 9, wobei die äußeren Formmittel (8, 9) einen ersten Formring (8) und einen zweiten Formring (9) umfassen, die auf eine äußere Oberfläche (61a) der Seitenwand (61) wirken und mit den inneren Formmitteln (3) zusammenarbeiten, um den ringförmigen Sitz (62) zu formen.

11. Vorrichtung gemäß Anspruch 10, wenn Anspruch 9 von einem der Ansprüche 5 bis 8 abhängt, wobei der erste Formring (8) an einem Ende des ersten Röhrenelements (4) fixiert ist und erste Durchgangsöffnungen (18) für den Durchlass des Luftflusses (T) umfasst, wobei insbesondere die Durchgangsöffnungen (18) jeweilige Durchlassabschnitte aufweisen, die kalibriert sind, um zu erreichen, dass der Luftfluss (T) im Wesentlichen gleichförmig entlang der äußeren Oberfläche (61a) der Seitenwand (61) ist.

12. Vorrichtung gemäß Ansprüchen 7 und 10, wobei der zweite Formring (9) innerhalb des Röhrenelements (5) fixiert ist und zweite Durchgangsöffnungen (19) für den Durchlass des Luftflusses (T) umfasst, wobei insbesondere die zweite Durchgangsöffnung (19) jeweilige Durchlassabschnitte aufweist, die kalibriert sind, um zu erreichen, dass der Luftfluss (T) im Wesentlichen gleichförmig entlang der äußeren Oberfläche (61a) der Seitenwand (61) ist.

## Revendications

1. Appareil (1) de formation pour la fabrication d'un raccordement en forme de tulipe (60) sur une extrémité (51) d'un tuyau (50) plastique au moyen de la déformation plastique à chaud, comprenant :
- des moyens de verrouillage (2) pour la saisie et le verrouillage dudit tuyau (50) à ladite extrémité (51) sur un côté opposé par rapport à une bouche (52) de celui-ci ;
- un moyen de formation intérieur (3) fonctionnant à l'intérieur de ladite extrémité (51) pour former ledit raccordement en forme de tulipe (60) ;
l'appareil comprend en outre des moyens de contenance (4, 5, 6) pour enfermer dans une configuration de formation et de refroidissement (D) dudit appareil (1), ledit raccordement en forme de tulipe (60) pendant la formation de celui-ci et former avec une paroi latérale (61) de ce dernier un conduit de refroidissement (10) présentant une forme sensiblement annulaire au travers de laquelle un flux d'air (T) peut être transporté autour et le long de ladite paroi latérale (61), ledit flux d'air (T) présentant une distribution uniforme à l'intérieur du conduit de refroidissement (10) autour d'un axe longitudinal (X) de ladite extrémité (51) et, en utilisation, lèche d'un seul tenant une surface extérieure (61a) de la paroi latérale (61) le long d'une direction de refroidissement (R) sensiblement parallèle audit axe longitudinal (X) de sorte à refroidir uniformément le raccordement en forme de tulipe (60), dans lequel ledit conduit de refroidissement (10) s'étend le long de ladite direction de refroidissement (R) et présente des sections de passage de sorte à obtenir que ledit flux d'air (T) soit sensiblement uniforme le long, et autour, de ladite paroi latérale (61).

2. Appareil selon la revendication 1, dans lequel lesdits moyens de contenance (4, 5, 6) comprennent au moins une ouverture d'entrée (14) pour l'afflux dudit air dans ledit conduit de refroidissement (10) et au moins une ouverture de sortie (15) pour le flux de sortie dudit air dudit conduit de refroidissement (10), en particulier ladite ouverture d'entrée (14) et ladite ouverture de sortie (15) étant positionnées sur lesdits moyens de contenance (4, 5, 6) de sorte que ledit flux d'air (T) entrant dans ledit conduit de refroidissement (10) s'écoule vers ladite bouche (52) afin de frapper en premier une portion initiale (60a) dudit raccordement en forme de tulipe (60) qui comprend ladite bouche (52).

3. Appareil selon la revendication 2, dans lequel lesdits moyens de contenance (4, 5, 6) comprennent une pluralité d'ouvertures d'entrée (14) et une pluralité d'ouvertures de sortie (15) qui sont sensiblement transversales à ladite paroi latérale (61).

4. Appareil selon l'une quelconque des revendications précédentes, dans lequel lesdits moyens de verrouillage (2) comprennent un couple de pinces (21) opposées mutuellement et mobiles transversalement audit axe longitudinal (X) pour le verrouillage ou la libération dudit tuyau (50).

5. Appareil selon l'une quelconque des revendications précédentes, dans lequel lesdits moyens de contenance (4, 5, 6) comprennent au moins un premier élément tubulaire (4), en particulier raccordé auxdits moyens de verrouillage (2).

6. Appareil selon les revendications 4 et 5, dans lequel ledit premier élément tubulaire (4) comprend un couple de demi-coques (41) opposées, chaque demi-coque (41, 42) étant fixée à, et mobile avec, une pince (21) respective desdits moyens de verrouillage (2).

7. Appareil selon la revendication 5 ou 6, dans lequel lesdits moyens de contenance (4, 5, 6) comprennent un deuxième élément tubulaire (5) associé audit moyen de formation intérieur (3) et agencé pour contenir et enfermer au moins une portion initiale (60a) dudit raccordement en forme de tulipe (60) et fermer ledit conduit de refroidissement (10) avec ladite paroi latérale (61) de celui-ci et en coopération avec ledit premier élément tubulaire (4).

8. Appareil selon la revendication 7, dans lequel lesdits moyens de contenance (4, 5, 6) comprennent un troisième élément tubulaire (6) associé audit moyen de formation intérieur (3), en particulier fixé aux moyens de support (7) dudit moyen de formation intérieur (3), et coopérant avec ledit premier élément tubulaire (4) et ledit deuxième élément tubulaire (5) pour former ledit conduit de refroidissement (10) au moins avec une paroi latérale (61) dudit raccordement en forme de tulipe (60).

9. Appareil selon l'une quelconque des revendications précédentes, comprenant un moyen de formation externe (8, 9) coopérant avec ledit moyen de formation intérieur (3) pour la formation dudit raccordement en forme de tulipe (60), en particulier pour la formation sur ladite paroi latérale (61) dudit raccordement en forme de tulipe (60) d'un siège annulaire (62) pour un joint d'étanchéité.

10. Appareil selon la revendication 9, dans lequel ledit moyen de formation externe (8, 9) comprend un premier anneau de formation (8) et un second anneau de formation (9) agissant sur une surface extérieure (61a) de ladite paroi latérale (61) et coopérant avec ledit moyen de formation intérieur (3) pour former ledit siège annulaire (62).

11. Appareil selon la revendication 10, lorsque la revendication 9 dépend de l'une quelconque des revendications 5 à 8, dans lequel ledit premier anneau de formation (8) est fixé à une extrémité dudit premier élément tubulaire (4) et comprend des premières ouvertures débouchantes (18) pour le passage dudit flux d'air (T), en particulier lesdites premières ouvertures débouchantes (18) présentant des sections de passage respectives qui sont étalonnées de sorte à obtenir ledit flux d'air (T) sensiblement uniformément le long de ladite surface extérieure (61a) de ladite paroi latérale (61).

12. Appareil selon les revendications 7 et 10, dans lequel ledit second anneau de formation (9) est fixé à l'intérieur dudit élément tubulaire (5) et comprend des secondes ouvertures débouchantes (19) pour le passage dudit flux d'air (T), en particulier ladite seconde ouverture débouchante (19) présentant des sections de passage respectives qui sont étalonnées de sorte que ledit flux d'air (T) soit obtenu de manière sensiblement uniforme le long de ladite surface extérieure (61a) de ladite paroi latérale (61).
